Europäisches Patentamt

European Patent Office

Office européen des brevets

(19)

(11)  EP 0 659 536 B1

(12)  EUROPÄISCHE PATENTSCHRIFT

(45) Veröffentlichungstag und Bekanntmachung des
Hinweises auf die Patenterteilung:
02.10.1996  Patentblatt 1996/40

(51) Int. Cl.$^6$: **B29C 47/90**, B29C 47/88

(21) Anmeldenummer: 94890214.3

(22) Anmeldetag: 19.12.1994

(54) **Vorrichtung und Verfahren zur Abkühlung von Kunststoffprofilen**

Apparatus and method for cooling plastic profiles

Appareil et procédé de refroidissement pour des profiles en matière plastique

(84) Benannte Vertragsstaaten:
AT BE CH DE DK ES FR GB IT LI NL SE

(30) Priorität: 23.12.1993 AT 2616/93

(43) Veröffentlichungstag der Anmeldung:
28.06.1995  Patentblatt 1995/26

(73) Patentinhaber: Technoplast Kunststofftechnik
Gesellschaft m.b.H.
4563 Micheldorf (AT)

(72) Erfinder: Dorninger, Frank
A-4563 Micheldorf (AT)

(74) Vertreter: Babeluk, Michael, Dipl.-Ing. Mag.
Patentanwalt,
Mariahilfer Gürtel 39/17
1150 Wien (AT)

(56) Entgegenhaltungen:
CH-A- 617 128          DE-A- 1 923 490
DE-A- 2 456 986

• DATABASE WPI Week 8839 9.November 1988
Derwent Publications Ltd., London, GB; AN 88-
276934 & SU-A-1 380 990 (UKR RUBBER
PLASTICS) , 15.März 1988
• PLASTVERARBEITER, Bd. 30, Nr. 6, Juni 1979
SPEYER/RHEIN DE, Seiten 321-328,
SCHIEDRUM 'Kalibrieren und Kühlen von
Rohren'
• Dubbels, Taschenbuch für den Maschinenbau,
11. Auflage, Springer-Verlag,
Berlin/Göttingen/Heidelberg, 1956, Erster Band,
Seiten 435 - 437

**Beschreibung**

Die Erfindung betrifft eine Vorrichtung und ein Verfahren zur Abkühlung von Kunststoffprofilen gemäß dem Oberbegriff von Patentanspruch 1 und gemäß dem Oberbegriff von Patentanspruch 9.

Kunststoffprofile werden beispielsweise als Rahmenelemente für Fenster oder Türen benötigt. Bei ihrer Herstellung wird zunächst eine Kunststoffmasse, wie etwa PVC, durch eine dem Profil entsprechende Öffnung extrudiert. Unmittelbar nach der Extrusion besitzt das Profil eine teigige Konsistenz. Nach dem Extruder ist üblicherweise eine Vorrichtung zur Trockenkalibrierung vorgesehen, in der eine erste Abkühlung und Formstabilisierung erfolgt. Daran anschließend erfolgt ein weiterer Abkühlvorgang mittels eines Kühlmediums, im allgemeinen Wasser, um die Wärme aus den inneren Bereichen des Profils abzuführen.

Die Erfindung betrifft insbesondere eine solche Vorrichtung zur Naßkalibrierung. Diese Vorrichtungen können allgemein in zwei Typen untergliedert werden. Eine besonders effiziente Abkühlung ist durch das sogenannte Sprühbad möglich. Dabei wird das Profil durch eine Wanne geführt, die mit einer Vielzahl von Sprühdüsen bestückt ist, die auf das Profil gerichtet sind. Eine solche Vorrichtung ist sehr effizient, da die Wasserstrahlen mit hoher Geschwindigkeit auf das Profil auftreffen, wodurch ein guter Wärmeübergang gewährleistet ist. Außerdem ist es bei einer solchen Vorrichtung möglich, durch günstige Anordnung der Düsen an sich schwierig zu kühlende Bereiche des Profils, wie einspringende Ecken oder Materialansammlungen, verstärkt zu kühlen.

Nachteilig bei einer solchen Sprühbad-Vorrichtung ist der hohe Wasserverbrauch und die Empfindlichkeit der Düsen. Um eine optimale Wirkung eines solchen Sprühbades zu erreichen, müssen Düsen von extrem kleinem Durchmesser eingesetzt werden. Eine Anspeisung mit Frischwasser ist wegen des hohen Wasserverbrauchs im allgemeinen nicht möglich. Bei einer Wasserrückführung ist jedoch ein außerordentlich großer Aufwand zur Wasseraufbereitung notwendig. Trotz dieser Maßnahmen kann es zu Verstopfungen der Düsen kommen, was zu einer mangelnden Kühlung des Profils und zur Herstellung von Ausschuß führen kann.

Beim anderen bekannten Naßkühlsystem handelt es sich um das sogenannte Vollbad. Bei bekannten Vorrichtungen dieser Art wird das Profil durch eine oben offene Wanne geführt, die mit einem Kühlmedium, etwa Wasser, gefüllt ist. Bei diesem System ist eine Wasserzufuhr nur insoweit notwendig, als sie zur Regulierung der Temperatur des Bades benötigt wird. Vorrichtungen nach diesem Vollbadprinzip sind einfach, unproblematisch in der Handhabung und sparsam im Wasserverbrauch. Da sie jedoch deutlich weniger effizient sind als Sprühbad-Vorrichtungen, werden sie derzeit nur für kleinere Profile oder untergeordnete Anwendungen verwendet.

Der Artikel "Kalibrieren und Kühlen von Rohren" in Plastverarbeiter Band 30, Nr. 6, Juni 1979, Speyer/Rein, Seiten 321 - 328, offenbart eine Vorrichtung zum Kalibrieren und Kühlen von Rohren, die dem Oberbegriff von Patentanspruch 1 entspricht, und die den nächstkommenden Stand der Technik darstellt, von dem die vorliegende Erfindung ausgeht. In diesem Artikel wird eine Wasserbad-Kalibrier-Vorrichtung beschrieben, bei der eine Strömung von Kühlwasser zwischen den einzelnen Räumen möglich ist, die durch Kalibrierblenden voneinander getrennt sind. Ziel ist es dabei, eine besonders intensive Kühlung des Rohres zu erreichen. Dazu wird vorgeschlagen, die Blenden mit Bohrungen auszustatten, um in Axialrichtung einen guten Kühlwasseraustausch zu gewährleisten. Es soll also durch die Anordnung einer Vielzahl von Bohrungen mit ausreichendem Durchmesser ein möglichst unbehinderter Kühlwasseraustausch erreicht werden. Es hat sich jedoch herausgestellt, daß ein solches Wasserbad in vielen Anwendungsfällen noch immer keine ausreichende Kühlwirkung entfaltet. Daher muß in solchen Fällen wiederum auf das Sprühbad zurückgegriffen werden, das jedoch seinerseits die oben beschriebenen Nachteile aufweist.

Weiters ist aus der DE-A-24 56 986 eine Vorrichtung zum Kalibrieren und Kühlen von Kunststoffrohren bekannt, bei der Kalibrierblenden vorgesehen sind, die mit Düsen ausgestattet sind, um Strahlen des Kühlmediums direkt auf das zu kalibrierende Rohr zu richten. Eine solche Vorrichtung ist sehr aufwendig und besitzt ähnliche Nachteile, wie sie oben in Bezug auf die Sprühbad-Kühlvorrichtungen beschrieben worden sind.

Ferner ist es aus der SU-A-1 380 990 bekannt, einen extrudierten Gegenstand durch ein Rohr größeren Durchmessers zu führen, das mit Bohrungen versehen ist, durch ein Kühlmedium aus einem entsprechenden Verteilungsraum außerhalb des Rohres austreten kann. Es erfolgt jedoch dabei keine Kalibrierung des extrudierten Gegenstandes.

Die DD - A-86 081 offenbart weiters eine Kalibriervorrichtung mit mehreren Kalibrierblenden, die in einer Wanne angeordnet sind. In gewisser Weise werden durch diese Blenden Wände gebildet, die in der Wanne Abschnitte begrenzen. Um nun eine effiziente Kühlung des Profils zu erreichen, sind die Blenden über einen eigenen Kühlwasseranschluß mit Kühlwasser versorgbar, das über entsprechende Düsen auf das Profil spritzbar ist. Eine solche Vorrichtung ist zwar wirksam, aber sehr aufwendig. Außerdem ist dieses System wirtschaftlich nur bei Überdruck-Kalibriervorrichtungen anwendbar, da bei Unterdruck-Kalibriervorrichtungen der Energieaufwand zu groß ist. Wegen der damit verbundenen Vorteile werden jedoch in der Praxis hauptsächlich Unterdruck-Kalibriervorrichtungen eingesetzt. Weiters wird die Einstellbarkeit der Kalibrierblenden durch die erforderlichen Anschlüsse wesentlich beeinträchtigt.

Weiters sind aus der DE - A-22 39 746 und aus der DE - A-19 23 490 Kalibriervorrichtungen bekannt, die jedoch ebenfalls die obigen Nachteile aufweisen.

Allgemein ist es die Aufgabe der vorliegenden Erfindung, eine Vorrichtung der eingangs beschriebenen Art, die nach dem Vollbadprinzip arbeitet, so weiterzubilden, daß die Effizienz gesteigert wird und der Einsatz auch bei größeren Profilen und Hochleistungsanlagen sinnvoll und wirtschaftlich möglich wird. Dabei sollen die wesentlichen Vorteile des Vollbades, nämlich die Einfachheit und Sparsamkeit im wesentlichen erhalten bleiben. Insbesonders soll in einfacher Weise eine effiziente Kühlung gewährleistet sein, wobei in der Wanne ein Unterdruck vorliegen soll.

Erfindungsgemäß werden die obigen Aufgabe durch eine Vorrichtung gemäß Anspruch 1 und durch ein Verfahren gemäß Anspruch 9 gelöst.

Vorteilhafte Ausführungsvarianten der Erfindung sind in den Unteransprüchen dargestellt.

Die Führungen teilen die Wanne in eine Vielzahl von Abschnitten, die in Axialrichtung des Profils nacheinander angeordnet sind. Wesentlich an der Erfindung ist jedoch, daß Öffnungen vorgesehen sind, die eine Strömung des Kühlmediums von einem Abschnitt in den nächsten ermöglichen. Durch den erzwungenen Umlauf des Kühlmediums wird im Bereich dieser Öffnungen Turbulenz erzeugt, die sich in die benachbarten Abschnitte hinein fortsetzt. Auf diese Weise kann ein Wärmeübergang zwischen Profil und Kühlmedium erzielt werden, der mit dem von Sprühbadsystemen vergleichbar ist.

Besonders günstig ist es, wenn die Öffnungen jeweils zweier benachbarter Wände gegeneinander versetzt angeordnet sind. Auf diese Weise wird neben der Turbulenz auch eine Globalströmung des Kühlmediums quer oder schräg zur Achse des Profils erzeugt, die den Wärmeübergang weiter verbessert.

In einer besonders bevorzugten Ausführungsvariante der Erfindung ist ein Teil der Öffnungen im Bereich besonders zu kühlender Oberflächenabschnitte des Profils angeordnet. Durch diese Maßnahme wird erreicht, daß an sich schwierig zu kühlende Profilbereiche, wie etwa einspringende Ecken, konkave Abschnitte oder Massenansammlungen besonders gekühlt werden, indem sie Bereichen höchster Turbulenz ausgesetzt werden. Auf diese Weise kann eine besonders gleichmäßige Abkühlung des Profils sichergestellt werden, was zur Vermeidung von Spannungen und zur Erhöhung der Maßhaltigkeit wichtig ist.

Weiters kann vorgesehen sein, daß eine Zuströmöffnung im Bereich einer Öffnung der Wanne angeordnet ist, durch die das Profil austritt und daß eine Abströmöffnung im Bereich einer Öffnung der Wanne angeordnet ist, durch die das Profil in die Wanne eintritt. Auf diese Weise wird das Profil und das Kühlmedium in Gegenstrom geführt, wodurch der Wärmeübergang optimiert wird. Es ist im Sinne der Erfindung jedoch auch möglich, zwei oder mehrere vollständig voneinander getrennte Kühlabschnitte hintereinander anzuordnen, die jeweils über eine eigene Zuströmöffnung und eine Abströmöffnung verfügen. Solche Kühlabschnitte sind durch Wände ohne Öffnungen voneinander getrennt.

Besonders bevorzugt ist eine Variante der erfindungsgemäßen Vorrichtung, in der in der Wanne ein Unterdruck erzeugt werden kann. Da in den Hohlräumen eines geschlossenen Profils Atmosphärendruck herrscht, wird auf diese Weise erreicht, daß sich das Profil besonders gut an die Führungen anlegt. Der Unterdruck in der Wanne liegt im allgemeinen bei 0,1 bar bis 0,3 bar unterhalb des Normaldruckes. Besonders günstig ist es dabei, wenn der Unterdruck durch eine selbst ansaugende Wasserpumpe hergestellt wird. Zusätzlich dazu können jedoch auch Vakuumpumpen zur Absaugung von Luft vorgesehen sein.

Vorzugsweise wird der Wasserumlauf bei diesem Verfahren im Zusammenhang mit der Geometrie der Vorrichtung so eingestellt, daß die Strömung innerhalb der Öffnungen der Wände Reynoldszahlen Re aufweist, die zwischen 5 000 und 40 000, vorzugsweise zwischen 8 000 und 25 000 liegen. Die Reynoldszahl Re ist durch die Gleichung

$$Re = d.v/\nu \qquad (1)$$

definiert, wobei d der hydraulische Durchmesser der Öffnung in m, v die mittlere Strömungsgeschwindigkeit in m/s und $\nu$ die kinematische Zähigkeit des Kühlmediums in $m^2/s$ bedeutet. Wie in der Hydrodynamik allgemein üblich, wird als hydraulischer Durchmesser ein Wert genommen, der sich nach folgender Formel berechnet:

$$d = 4.A/U \qquad (2)$$

wobei A die Querschnittsfläche der Öffnung und U den Umfang der Öffnung bezeichnet. Für kreisförmige Öffnungen entspricht der hydraulische Durchmesser dem geometrischen Durchmesser.

Die mittlere Geschwindigkeit v ergibt sich aus dem durch die Öffnung tretenden Volumenstrom, dividiert durch den Querschnitt der Öffnung. Die kinematische Zähigkeit $\nu$ berechnet sich aus:

$$\nu = \eta/\rho \qquad (3)$$

wobei $\eta$ die Viskosität und $\rho$ die Dichte des Mediums darstellt. Bei zu geringen Reynoldszahlen Re stellt sich keine ausreichende Turbulenz ein. Bei zu hohen Reynoldszahlen Re steigt der Strömungswiderstand stark an, so daß die Wirtschaftlichkeit durch den hohen Energieverbrauch beeinträchtigt ist.

In der Folge wird die Erfindung anhand des in den Figuren dargestellten Ausführungsbeispieles näher erläutert. Die Figuren zeigen:

Fig. 1 eine erfindungsgemäße Vorrichtung in einer Seitenansicht,

Fig. 2 die Vorrichtung in Fig. 1 in einer Ansicht von oben,

Fig. 3 einen Schnitt nach Linie III - III von Fig. 1 in vergrößertem Maßstab.

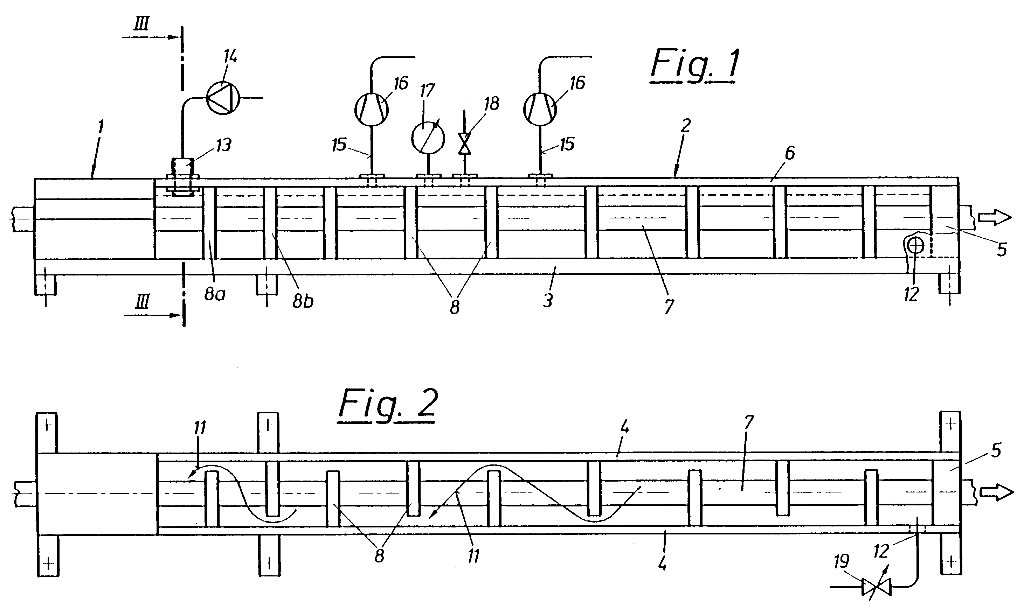

Die Vorrichtung von Fig. 1 besteht aus einer Trokkenkalibriereinrichtung 1 und einer Naßkalibriereinrichtung 2. Die Naßkalibriereinrichtung 2 besteht aus einer Wanne, die aus einer Grundplatte 3 und Seitenwänden 4, sowie einer Endplatte 5 aufgebaut ist. Nach oben hin ist die Wanne 2 durch eine Deckplatte 6 abgeschlossen. Das aus der Trockenkalibriereinrichtung 1 austretende Profil 7 tritt unmittelbar in die Wanne ein und verläßt sie am anderen Ende durch die Endplatte 5. Innerhalb der Wanne sind mehrere Führungen 8 vorgesehen, die zur Kalibrierung des Profils 7 dienen.

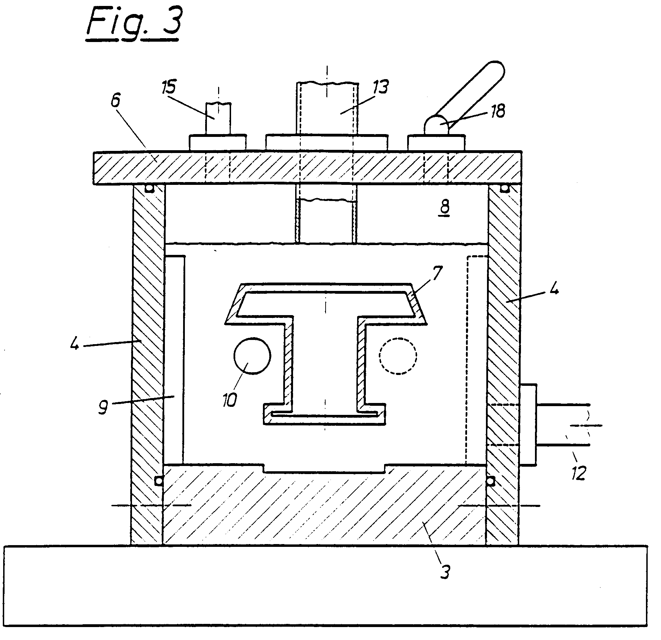

Aus der Fig. 3 ist der Aufbau der erfindungsgemäßen Vorrichtung im Querschnitt ersichtlich. Die Führungen 8 umschließen das Profil 7, dessen Außenumfang den ersten Öffnungen dieser Führungen 8 entspricht und füllen den Querschnitt der Wanne fast vollständig aus, der durch die Grundplatte 3, die Seitenwände 4 und die Deckplatte 6 begrenzt wird. In dem in Fig. 3 gezeigten Beispiel bleiben lediglich Öffnungen 9 und 10 frei, die einen Flüssigkeitsaustausch zwischen den durch die Wand 8a getrennten Abschnitten 11a und 11b der Wanne ermöglichen. Die Öffnung 9 ist als Schlitz im Bereich einer Seitenwand 4 der Wanne ausgebildet. Die Öffnung 10 ist kreisförmig im Bereich eines konkaven Profilabschnittes vorgesehen, um die Kühlung hier zu verstärken.

Es ist im Sinne der Erfindung möglich, verschiedene Öffnungen 9 und 10 in der gleichen Wand 8a vorzusehen, wie dies in der Fig. 3 dargestellt ist. Es ist jedoch ebenso möglich, einen Teil der Wände mit länglichen Öffnungen 9 zu versehen und einen anderen Teil der Wände mit Öffnungen 10 im Bereich des Profils 7. Jedenfalls ist es jedoch günstig, die Öffnungen 9, 10 zweier benachbarter Wände 8a, 8b gegeneinander versetzt anzuordnen, wie dies in Fig. 3 strichliert angedeutet ist und auch aus Fig. 2 ersichtlich ist. Durch die Pfeile 11 in Fig. 2 ist der Hauptströmungsweg des Kühlmediums angedeutet.

Im Bereich der Endplatte 5 ist eine Zuströmöffnung 12 für das Kühlwasser vorgesehen. Die Abströmöffnung 13 im Bereich des Eintritts des Profils 7 ist mit einer selbstansaugenden Wasserpumpe 14 verbunden. Diese fördert das Wasser in einen nicht dargestellten Vorratsbehälter oder in den Abfluß. Da in der erfindungsgemäßen Vorrichtung keine empfindlichen Düsen vorgesehen sind, kann ein Teilstrom des abgesaugten Wassers rückgeführt werden. Frischwasser wird im dem Ausmaß zugeführt, wie dies zur Regelung der Temperatur des Wasserbades erforderlich ist.

Um ein übermäßiges Absinken des Wasserspiegels in der Vorrichtung zu verhindern, sind mehrere Absaugungen 15 vorgesehen, die mit einer Vakuumpumpe 16 verbunden sind. Der Druck im Inneren des Systems kann mit einem Manometer 17 kontrolliert werden. Ein Kugelhahn 18 ermöglicht die händische Regulierung des Unterdruckes. An der Zuströmöffnung 12 ist ein Drosselventil 19 vorgesehen, mit dem der Unterdruck und der Volumenstrom des Kühlmediums beeinflußt werden kann.

Die Berechnung der Reynoldszahl sei an folgendem Zahlenbeispiel erläutert: Eine Wand 8 sei mit einer einzigen rechteckigen Öffnung 9 von 140 mm Länge und 20 mm Breite versehen. Der hydraulische Durchmesser d beträgt somit 0,35 m. Der Volumenstrom des Kühlmediums betrage 2 l/s. Die mittlere Strömungsgeschwindigkeit v ist also 0,714 m/s. Als Kühlmedium wird Wasser verwendet, dessen kinematische Zähigkeit $v$ $10^{-6}$ m²/s beträgt.

Daraus ergibt sich

$$Re = d.v/v = 25\,000.$$

Unter diesen Bedingungen wird eine ausreichende Turbulenz und eine günstige Kühlwirkung bei geringem Aufwand erreicht.

**Patentansprüche**

1. Vorrichtung zur Abkühlung von Kunststoffprofilen, mit einer Wanne zur Aufnahme eines Kühlmediums, durch das das Profil (7) geführt werden kann, und mit mehreren Führungen zur Kalibrierung des Profils (7), sowie mit mindestens einer Zuströmöffnung (12) und mit mindestens einer Abströmöffnung (13) für Kühlwasser, wobei die Führungen zumindest teilweise als Wände (8) ausgebildet sind, die fluchtend angeordnete erste Öffnungen aufweisen, deren Form dem Außenumriß des zu kalibrierenden Profils (7) entspricht und durch die das Profil (7) geführt werden kann, und wobei diese Wände (8) die Wanne (11) in Längsrichtung des Profils (7) in mehrere Abschnitte unterteilen, und wobei diese Wände (8) jeweils mindestens eine weitere Öffnung (9, 10) aufweisen, dadurch gekennzeichnet, daß die weitere Öffnung (9, 10) zur Erzeugung einer turbulenten Strömung des Kühlwassers zwischen zwei Abschnitten der Wanne (11) ausgebildet ist, so daß im Bereich des Profils (7) eine turbulente Strömung des Kühlwassers auftritt.

2. Vorrichtung nach Anspruch 1, dadurch gekennzeichnet, daß die Öffnungen (9, 10) jeweils zweier benachbarter Wände (8) gegeneinander versetzt angeordnet sind.

3. Vorrichtung nach einem der Ansprüche 1 oder 2, dadurch gekennzeichnet, daß ein Teil der Öffnungen (9, 10) im Bereich der Teile der ersten Öffnung angeordnet ist, die den besonders zu kühlenden Oberflächenabschnitte des Profils (7) entsprechen.

4. Vorrichtung nach einem der Ansprüche 1 bis 3, dadurch gekennzeichnet, daß ein Teil der weiteren Öffnungen (9) als Ausnehmungen zwischen den Wänden (8) und den Außenwänden (4) der Wanne (11) ausgebildet sind.

5. Vorrichtung nach einem der Ansprüche 1 bis 4, dadurch gekennzeichnet, daß die Zuströmöffnung (12) im Bereich einer Öffnung der Wanne angeordnet ist, die zum Austreten des Profils (7) vorgesehen ist, und daß die Abströmöffnung (13) im Bereich einer Öffnung der Wanne angeordnet ist, die zum Eintreten des Profils (7) vorgesehen ist.

6. Vorrichtung nach einem der Ansprüche 1 bis 5, dadurch gekennzeichnet, daß eine Einrichtung zur Erzeugung von Unterdruck in der Wanne vorgesehen ist.

7. Vorrichtung nach Anspruch 6, dadurch gekennzeichnet, daß die Einrichtung zur Erzeugung von Unterdruck als selbst ansaugende Wasserpumpe (14) ausgebildet ist, deren Saugstutzen mit der Abströmöffnung (13) für Kühlwasser in Verbindung steht.

8. Vorrichtung nach Anspruch 7, dadurch gekennzeichnet, daß zusätzlich Vakuumpumpen (16) zur Absaugung von Luft aus der Wanne vorgesehen sind.

9. Verfahren zur Abkühlung von Kunststoffprofilen, bei dem das Profil (7) in eine mit einem Kühlmedium gefüllte Wanne eingeführt wird und am anderen Ende der Wanne aus dieser herausgeführt wird, wobei das Profil (7) durch in der Wanne angeordnete Führungen die zumindest teilweise als Wände (8) mit fluchtend angeordneten ersten Öffnungen, deren Form dem Außenumriß des zu kalibrierenden Profils (7) entspricht und mit mindestens einer weiteren Öffnung (9, 10) ausgebildet sind, kalibriert wird, wobei das Kühlmedium über eine Zuström-Öffnung (12) in die Wanne eingeführt wird, und aus einer Abström-Öffnung (13) aus der Wanne abgeführt wird und wobei die Stromung des Kühlwassers in der Wanne über mehrere Abschnitte geführt wird, in die die Wanne durch die Wände (8) unterteilt ist, dadurch gekennzeichnet, daß die Strömung zwischen diesen Abschnitten so durch die weiteren Öffnungen (9, 10) geführt wird, daß im Bereich des Profils (7) eine turbulente Strömung des Kühlwassers auftritt.

10. Verfahren nach Anspruch 9, dadurch gekennzeichnet, daß die turbulente Strömung durch Absaugen von Kühlmedium aus der Abströmöffnung (13) hergestellt wird.

11. Verfahren nach einem der Ansprüche 9 oder 10, dadurch gekennzeichnet, daß die Strömung innerhalb der Öffnungen (9, 10) der Wände (8) Reynoldszahlen Re aufweist, die zwischen 5 000 und 40 000, vorzugsweise zwischen 8 000 und 25 000, liegen. Die Reynoldszahl Re ist durch die Gleichung

$$Re = d.v \, / \, \nu \qquad (1)$$

definiert, wobei d der hydraulische Durchmesser der Öffnung ((9, 10) in m, v die mittlere Strömungsgeschwindigkeit in m/s und $\nu$ die kinematische Zähigkeit des Kühlmediums in $m^2/s$ bedeutet.

## Claims

1. Apparatus for cooling plastic profiles, with a trough for receiving a cooling medium through which the profile (7) can be guided and with several guiding means for calibrating the profile (7) as well as with at least one inflow opening (12) and with at least one outflow opening (13) for cooling water, wherein the guiding means are arranged at least partially arranged as seperating walls (8) comprising first openings that are aligned, whose shape corresponds the external shape of the profile (7) to be calibrated, and through that the profile can be guided, and wherein said walls (8) subdivide the trough (11) in longitudinal direction of the profile (7) into several sections, and wherein said walls (8) comprise at least a further opening (9, 10), characterized in that said further opening (9, 10) is adapted to generate a turbulent flow of the cooling water between two sections of the trough (11), so that in the vicinity of the profile (7) a turbulent flow of the cooling water is present.

2. An apparatus as claimed in claim 1, characterized in that the openings (9, 10) of two adjacent separating walls (8) are arranged in a mutually offset manner.

3. An apparatus as claimed in one of the claims 1 or 2, characterized in that some of the openings (9,10) are arranged in the region of surface sections of the profile (7) to be cooled especially.

4. An apparatus as claimed in one of the claims 1 to 3, characterized in that some of the openings (9) are arranged as recesses between the separating walls (8) and the walls (4) of the trough.

5. An apparatuus as claimed in one of the claims 1 to 4, characterized in that the inflow opening (12) is arranged in the region of an opening of the trough through which the profile (7) exits and that the outflow opening (13) is arranged in the region of an opening of the trough through which the profile (7) enters the trough.

6. An apparatus as claimed in one of the claims 1 to 5, characterized in that there is provided a device for producing a pressure below atmospheric in the trough.

7. An apparatus as claimed in claim 6, characterized in that the device for producing the pressure below atmospheric is arranged as a self-sucking water pump (14) whose suction nozzle is in connection with the outflow opening (13) for cooling water.

8. An apparatus as claimed in claim 7, characterized in that additional vacuum pumps (16) are provided for sucking off air from the trough.

9. Method for cooling plastic profiles, in which the profile (7) is guided into a trough filled with a cooling medium and in which the profile is guided out therefrom at the other end of the trough, wherein the profile (7) is calibrated by guiding means arranged in the trough, which are at least partially arranged as seperating walls (8) comprising first openings that are aligned, whose shape corresponds the external shape of the profile (7) to be calibrated and at least a further opening (9, 10), wherein the cooling medium is fed through an inflow opening (12) into the trough and is released by an outflow opening (13) from the trough, and whereby the the flow of the cooling water is led through several sections formed by the walls (8) subdividing the through, characterized in that the flow between said sections is led through the further openings (9, 10) so that in the vicinity of the profile (7) a turbulent flow of the cooling water is present.

10. A method as claimed in claim 9, characterized in that the turbulent flow is produced by sucking off cooling medium from the outflow opening (13).

11. A method as claimed in one of the claims 9 or 10, characterized in that the flow within the openings of the separating walls is provided with Reynolds' numbers which are between 5000 and 40000, preferably between 8000 and 25000. The Reynolds' number Re is defined by the equation.

$$Re = d.v/\nu \qquad (1),$$

with d being the hydraulic diameter of the opening (9, 10) in m, v the mean flow speed in m/s and $\nu$ the kinematic viscosity of the cooling medium in $m^2$/s.

**Revendications**

1. Dispositif pour refroidir des profilés en matière plastique, comprenant une cuve qui est destinée à recevoir un agent de refroidissement et à travers laquelle le profilé (7) peut être amené à passer, et comprenant plusieurs guidages de calibrage du profilé (7), ainsi qu'au moins une ouverture d'amenée (12) et au moins une ouverture d'évacuation (13) pour de l'eau de refroidissement, cependant que les guidages sont réalisés, du moins partiellement, sous la forme de cloisons (8) présentant des premiers passages qui sont alignés entre eux, dont la forme correspond au pourtour extérieur du profilé à calibrer (7) et à travers lesquels le profilé (7) peut être amené à passer, que ces cloisons (8) divisent la cuve (11) en plusieurs compartiments dans la direction longitudinale du profilé (7), et que ces cloisons (8) présentent chacune au moins un autre passage (9, 10), caractérisé par le fait que l'autre passage (9, 10) est conformé de manière à engendrer un écoulement turbulent de l'eau de refroidissement entre deux compartiments de la cuve (11), de sorte qu'un écoulement turbulent de l'eau de refroidissement se produit dans la région du profilé (7).

2. Dispositif selon la revendication 1, caractérisé par le fait que les passages (9, 10) de deux cloisons (8) qui sont à chaque fois voisines sont disposés en étant décalés entre eux.

3. Dispositif selon l'une des revendications 1 et 2, caractérisé par le fait qu'une partie des passages (9, 10) est disposée dans la région des parties du premier passage qui correspond aux parties de la surface du profilé (7) que l'on doit refroidir plus particulièrement.

4. Dispositif selon l'une des revendications 1 à 3, caractérisé par le fait qu'une partie des autres passages (9) est réalisée sous la forme d'évidements situés entre les cloisons (8) et les parois extérieures (4) de la cuve (11).

5. Dispositif selon l'une des revendications 1 à 4, caractérisé par le fait que l'ouverture d'amenée (12) est disposée dans la région d'une ouverture de la cuve qui est prévue pour la sortie du profilé (7), et par le fait que l'ouverture d'évacuation (13) est disposée dans la région d'une ouverture de la cuve qui est prévue pour l'entrée du profilé (7).

6. Dispositif selon l'une des revendications 1 à 5, caractérisé par le fait qu'il est prévu un dispositif pour engendrer une dépression dans la cuve.

7. Dispositif selon la revendication 6, caractérisé par le fait que le dispositif pour engendrer une dépression est réalisé sous la forme d'une pompe à eau à autoamorçage (14) dont la tubulure d'aspiration est en communication avec l'ouverture d'évacuation (13) destinée à l'eau de refroidissement.

8. Dispositif selon la revendication 7, caractérisé par le fait qu'il est prévu en outre des pompes à vide (16) pour aspirer l'air de la cuve.

9. Procédé pour refroidir des profilés en matière plastique, dans lequel le profilé (7) est introduit dans une cuve remplie d'un agent de refroidissement et extrait de la cuve à son autre extrémité, cependant que le profilé (7) est calibré par des guidages disposés dans la cuve et réalisés, du moins partiellement, sous la forme de cloisons (8) présentant des premiers passages qui sont alignés entre eux et dont la forme correspond au pourtour extérieur du profilé (7) à calibrer, et présentant au moins un autre passage (9, 10), cependant que l'agent de refroidissement est introduit dans la cuve par une ouverture d'amenée (12) et qu'il est évacué de la cuve par une ouverture d'évacuation (13), et cependant que l'écoulement de l'eau de refroidissement dans la cuve a lieu en passant par plusieurs compartiments qui divisent la cuve entre les cloisons (8), caractérisé par le fait que l'écoulement entre ces compartiments est guidé par les autres passages (9, 10) d'une manière telle qu'il se produise un écoulement turbulent de l'eau de refroidissement dans la région du profilé (7).

10. Procédé selon la revendication 9, caractérisé par le fait que l'écoulement turbulent est réalisé par aspiration de l'agent de refroidissement depuis l'ouverture d'évacuation (13).

11. Procédé selon l'une des revendications 9 et 10, caractérisé par le fait que l'écoulement à l'intérieur des passages (9, 10) des cloisons (8) présente un nombre de Reynolds Re qui est situé entre 5.000 et 40.000, et de préférence entre 8.000 et 25.000, le nombre de Reynolds Re étant défini par la relation :

$$Re = (d.v) / \nu$$

dans laquelle d est le diamètre hydraulique du passage (9, 10) en mètres, v est la vitesse moyenne de l'écculement en m/s et $\nu$ est la viscosité cinématique de l'agent de refroidissement en $m^2/s$.

*Fig. 1*

*Fig. 2*

EP 0 659 536 B1

Fig. 3